# EUROPEAN PATENT SPECIFICATION

(11) **EP 4 115 377 B1**
(45) Date of publication and mention of the grant of the patent: **05.08.2026**
(21) Application number: 20922506.9
(22) Date of filing: 06.03.2020
(51) Int. Cl.: G06Q 30/02, H04W 4/24, H04H 60/33, G06Q 30/0207, G06Q 30/0241, H04H 20/24, H04H 60/31, H04H 60/37, H04L 12/14, H04L 51/10, H04L 67/52, H04L 67/53, H04M 15/00, H04N 21/442, H04N 21/478, H04N 21/4784, H04N 21/61, H04N 21/658, H04N 21/81

(54) **SYSTEM AND METHOD FOR DISTRIBUTING MULTIMEDIA CONTENT**
SYSTEM UND VERFAHREN ZUR VERTEILUNG VON MULTIMEDIA-INHALTEN
SYSTÈME ET PROCÉDÉ DE FOURNITURE DE CONTENU MULTIMÉDIA

(43) Date of publication of application: 11.01.2023
(73) Proprietor: Hubbard, Robert B., Burlington, KY 41005 (US)
(72) Inventor: Hubbard, Robert B., Burlington, KY 41005 (US)
(74) Representative: Lusinchi, Laurent Pierre
(86) International application number: PCT/US2020/021583
(87) International publication number: WO 2021/177978

(56) References cited:
- US-A1- 2007 162 951
- US-A1- 2010 058 376
- US-A1- 2010 058 376
- US-A1- 2010 325 544
- US-A1- 2011 064 386
- US-A1- 2014 136 978
- US-A1- 2016 094 705
- US-A1- 2016 219 332
- US-A1- 2016 283 982
- US-A1- 2017 187 683
- US-A1- 2018 124 473
- US-A1- 2019 066 160
- US-A1- 2019 069 013
- HESS JAN, LEY BENEDIKT, OGONOWSKI CORINNA, WAN LIN, WULF VOLKER: "Jumping between devices and services : towards an integrated concept for social tv", PROCEDDINGS OF THE 9TH INTERNATIONAL INTERACTIVE CONFERENCE ON INTERACTIVE TELEVISION, 1 January 2011 (2011-01-01) - 1 July 2011 (2011-07-01), New York, New York, USA, pages 11 - 20, XP055850813, ISBN: 978-1-4503-0602-7, DOI: 10.1145/2000119.2000122

## Description

### REFERENCE TO RELATED APPLICATION

This application claims priority from U. S. Patent Application No. 16/169,139 filed by Robert B. Hubbard as Applicant and Carl Freer as inventor on October 24, 2018 and entitled **SYSTEM AND METHOD FOR TRANSMITTING AND RECEIVING MULTIMEDIA CONTENT** and relates to U. S. Patent No. 10,169,780 issued January 1, 2019 to Robert B. Hubbard, Applicant, with Carl Freer as inventor entitled **SYSTEM AND METHOD FOR TRANSMITTING AND RECEIVING MULTIMEDIA CONTENT.**

### BACKGROUND

### Field:

The present technology relates to communication systems. More specifically, the present technology relates to systems for communicating between television networks, cellular networks and mobile wireless devices.

### Description of the Related Art:

There is a need in the art for a system or method for confirming viewership of multimedia advertising content and rewarding viewers for sharing information regarding ad viewing history and preferences.

The need in the art was addressed by U.S. Patent number 10,169,780, issued January 1, 2019 to R. B. Hubbard and entitled a *System and Method For Transmitting and Receiving Multimedia Content.*

While the teachings of the Hubbard patent cited above spoke to needs in the art, further needs remain and those include at least a need for a system for extending the utility and functionality of the Hubbard system to television networks and markets.

US 2010/058376 discloses a computer implemented method and system for confirming that a viewer viewed multimedia content on a client device. A multimedia content owner uploads multimedia content on a server. The client device receives the multimedia content from the server and plays the multimedia content on a display screen of the client device. A random challenge is presented to the viewer by overlaying the random challenge on the multimedia content. A response for the presented random challenge is invoked from the viewer. A correct or partially correct response from the viewer confirms that the multimedia content has been viewed by the viewer. A response report is generated based on the response from the viewer. The viewer is credited with an item of value and the multimedia content owner is debited a fee, if the response report confirms the multimedia content was viewed by the viewer.

US 2007/162951 discloses a system where content which users may wish to receive may be distributed with interrupting content such that the use of the content on the user's receiver may be interrupted and replaced with the interrupting content. The content which the user wishes to receive may be software, audio, video, graphics or other material and the interrupting content in one embodiment of the prevent invention may be advertisements. In this way, the user's receiver may be utilized to determine when it is appropriate to interrupt the interruptible content with the interrupting content. This may provide a convenient mechanism for reduced price or free distribution of a wide variety of media currently provided only in physical form or only for free without any compensation to the content provider.

US2018/124473 discloses systems and methods to address shortcomings in conventional systems that traditionally provide interactive television services. In some aspects, the systems and methods provide for a method for managing an interactive session in an interactive media guidance application. The interactive media guidance application receives a user selection of a media asset. The interactive media guidance application stores, in a buffer, an advertisement received during display of the media asset. The interactive media guidance application receives a user request to initiate an interactive session. The interactive media guidance application analyzes the buffer for information relating to the advertisement based on the user request to initiate the interactive session. The interactive media guidance application receives a user request for information in the interactive session. The interactive media guidance application generates for display the information relating to the advertisement based on the user request for information relating to the advertisement.

US 2016/219332 discloses systems that contemplate detection, estimation, and/or adaptation to user presence, proximity and/or ambient lighting conditions. Embodiments also contemplate user proximity estimation based on input from sensors in mobile devices. Embodiments further contemplate volume control and/or audio bitstream selection based on an estimate of one or more of these parameters: user's location, age, gender, ambient noise level and/or multiple users. Also, embodiments contemplate detection, estimation, and/or adaptation to user presence and/or user attention to advertisements delivered via various mechanisms, perhaps at various locations.

US 2019/069013 discloses system and methods for finding and analyzing targeted content from audio and video content sources, including means and methods for extracting captions from audio and video content sources; searching the captions for a mention of at least one target; extracting audio and video segments relating to the at least one target; delivering extracted audio and video segments to a user device; harvesting social media data relevant to the at least one target; analyzing the search results in correlation with the social media data for target content.

US 2014/136978 discloses a method and system for sharing an output device between multimedia devices to transmit and receive data. The method includes operations of automatically discovering one or more second multimedia devices, when a first multimedia device is positioned within communication range of the one or more second multimedia devices that transmit a low power signal; and transmitting data of the first multimedia device to the one or more second multimedia devices, when the one or more second multimedia devices are discovered.

### SUMMARY

The Invention is defined by the enclosed claims.

The need in the art is addressed by the system and method of the present technology. The inventive system is adapted for transmitting, receiving and outputting multimedia content and provide confirmation of viewing of same and includes: a server for transmitting multimedia content via a network, said content containing audio as well as video content; a system for receiving and viewing television content; a mobile computing and communications platform for automatically providing a signal to the server effective to confirm viewing of the content on a television by a user.

In illustrative embodiments, the system is adapted to store and execute software with code for automatically detecting and selecting alternate platforms for viewing the content, including television, mobile, personal computing and gaming platforms. Code is included for sending the content from one alternate platform to another.

In addition, multiple confirmation modes are provided including user prompts, eye tracking, reading of embedded QR codes and automatic content recognition.

### BRIEF DESCRIPTION OF THE DRAWINGS

Figure 1 is a block diagram showing an illustrative hardware implementation of a system for multimedia in accordance with the present teachings.
Figure 2 is a map of the functions provided by the applet in accordance with an illustrative embodiment of the present teachings.
Figure 3 is a flow diagram of illustrative software running on the controller to effect control of the operation of the system of Fig. 1.
Figure 4 is a flow diagram of schedule and content downloading logic in accordance with an alternative embodiment of the present teachings.
Figure 5 is a flow diagram showing an illustrative implementation of the playback functions.
Figure 6 is a flow diagram of an illustrative implementation of the content display function shown in Figures 3 and 5 in accordance with the present teachings.
Figure 7 is a flow diagram of an illustrative implementation of the viewing confirmation function shown in Figure 3 and 5 in accordance with the present teachings.
Figure 8 is a simplified block diagram of illustrative embodiment of a receiver side platform in accordance with the present teachings.

### DESCRIPTION

Illustrative embodiments and exemplary applications will now be described with reference to the accompanying drawings to disclose the advantageous teachings of the present technology.

While the present technology is described herein with reference to illustrative embodiments for particular applications, it should be understood that the technology is not limited thereto. Those having ordinary skill in the art and access to the teachings provided herein will recognize additional modifications, applications, and embodiments within the scope thereof and additional fields in which the present technology would be of significant utility.

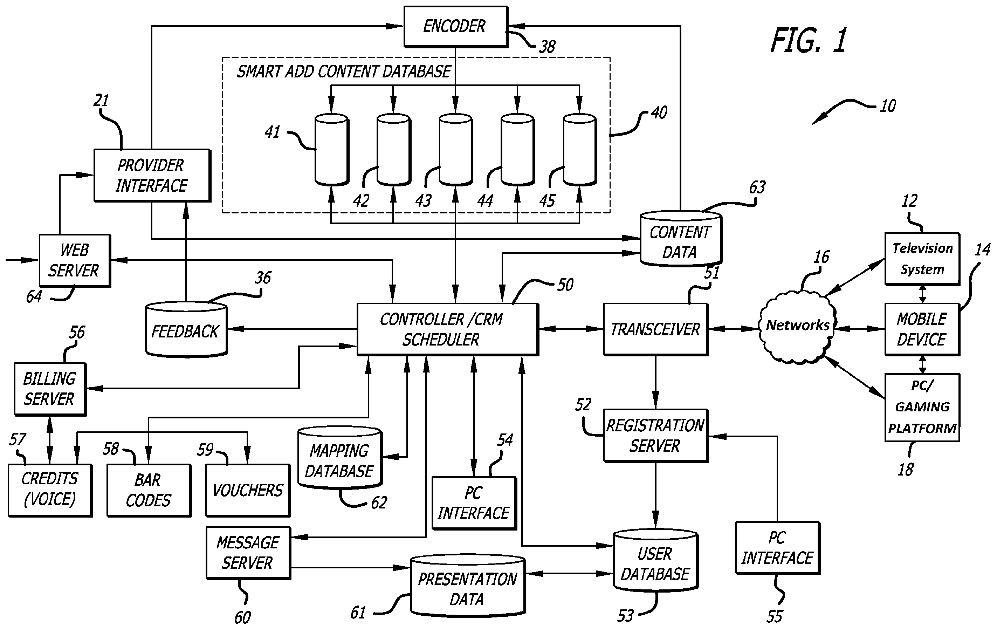

Figure 1 is a block diagram, which shows an illustrative implementation of a system for distributing multimedia content to mobile wireless platforms in accordance with the teachings of the present technology. As shown in Fig. 1, the system 10 includes an encoder 38, which receives multimedia content via an interface 21. The interface 21 is a provider interface connected to the web via a web server 64. As an alternative, the content may be provided via a disk or other means. The encoder 38 encodes and compresses the content and stores the content in a hub 40. For example, a 10 - 30 second file might be compressed into 150 - 300 kilobyte packet. The hub 40 is a storage facility such as a bank of content servers. The hub 40 is shown with five servers 41 - 45. However, those skilled in the art will appreciate that the technology is not limited to the number of servers used.

The hub 40 is operationally coupled to a controller 50 which, in accordance with the present teachings, serves, *inter alia,* as a scheduler. In practice, the schedule may be input locally or via the web using a PC interface 54.

The system 10 further includes a feedback database 36 for storing data relating to user responses to the content as discussed more fully below. A registration server 52 is included to store user data (registration and preferences) in a user database 53. This data may be received over the web from users via the user's PC interface 55. An optional billing server 56 is coupled to the controller as well. The billing server 56 also communicates with optional credit, bar code and voucher servers 57, 58 and 59. A message server is coupled to the controller 50 and provides messages related data. A mapping database is included for location-based services as discussed herein.

In accordance with the present teachings, the controller 50 transmits the content via a transceiver 51 to one or more selected platform units including a television platform 12, a smartphone platform 14 and/or a PC gaming platform 18 in accordance with a schedule.

The system uses a complementary service for receiving platforms which utilizes the GPS (Global Positioning System) as an embedded or added application. This service provides: user location, the location of the nearest outlet (of the advertiser) in relation to user position and in some instances a turn by turn route direction to the outlet. As an alternative, user position data may be provided by a cellular position location system.

In the best mode, an applet is transmitted to each mobile unit.

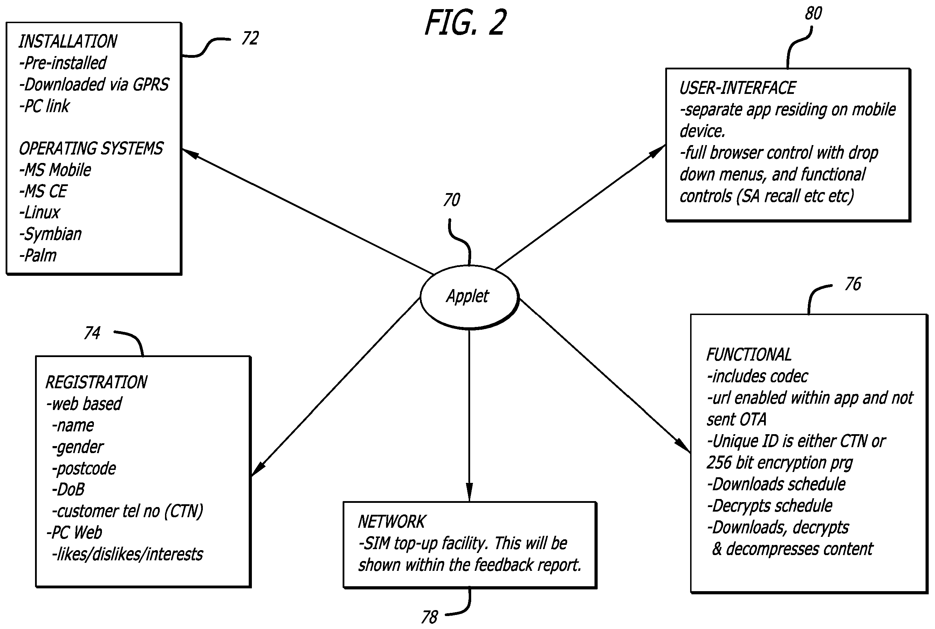

Figure 2 is a map of the functions provided by the applet 70 in accordance with an illustrative embodiment of the present teachings. The applet 70 is a small program written in C or C⁺⁺ or other suitable program. As shown at 72, the applet 70 may be preinstalled, downloaded OTA via a GPRS, CDMA or other suitable link, or transferred from a PC.

The program should be compatible with the operating system of the device (e.g. Android (Google), iOS (Apple), Bada (Samsung), Blackberry OS (Research in Motion), Windows OS (Microsoft), Symbian OS (Nokia), Tizen (Samsung), etc.) and it should include code for decoding and decompressing content received on each receiving platform.

In an illustrative embodiment, the applet extracts an XML file which includes a schedule for playback of the content. However, the content may be played out immediately, on demand or command or on the basis of a predetermined set of user inputs. As shown at 74, the applet may be used to upload the original registration detail, e.g., name, DOB, gender, zip/postcode, etc. to the server. The applet may be used to communicate technical parameters of the receiving platform including operating system, screen resolution and performance. Additional information and preferences can be added through the app.

In the illustrative embodiment, as shown at 76, the applet 70 is provided on an open source codec. As discussed herein, the applet 70 downloads the schedule. The schedule may be requested by each device from the server on a periodic (e.g. daily) basis. In the preferred embodiment, the schedule is an XML file.

Preferably, the content is delivered in either Hypertext Transfer Protocol (http), Hypertext Transfer Protocol Secure (https), File Transfer Protocol (FTP) as it is embodied within Transfer Control Protocol Internet Protocol (TCP/IP) or any other format within the TCP/IP environment or OTA via the wireless network operator's protocol spectrum.

Before the receiving platform is able to receive multimedia messages, the applet is activated either by OTA SMS message from the server which is hidden from the user, or this is specified within the applet itself. Once activated the receiving platform will start to periodically check the server for a schedule. This interfaces the applet which wakes the device and retrieves the schedule. Alternatively, the applet could be self-activating or activated based on other conditions without departing from the scope of the present teachings. Preferably, the applet is agile across platforms. As is known in the art, this may be achieved by compilation in the respective operating systems of the target platforms.

In the illustrative embodiment, the content is transmitted via a wireless network provided by a wireless network operator, a Mobile Virtual Network Operator (MVNO) or any other licensed network airtime provider and downloaded on the device 12 (along with the "play-out" instructions) well in advance of the included encoded scheduled play-out time. Those skilled in the art will recognize that this allows the delivery of the content to be staggered relative to the play-out time thereof. The content can thus be timed to play-out simultaneously, at a particular time in a local or predetermined time zone, or at a relative time based on user activity.

Any suitably fast network may be used to transmit the content. In GSM (Global System for Mobile Communications) networks, the applet and the ad may be transmitted using GPRS (General Packet Radio Service).

### See http://www.gsmworld.com/technology/gprs/intro.shtml#1.

GPRS, also called 2.5 G, builds on existing second generation GSM networks and is well suited for the delivery of AdXero Ads. However, the present method may be implemented in 3G CDMA (Code Division Multiple Access) or WCDMA (Wideband CDMA) or TDMA (Time Division Multiple Access) networks without departing from the scope of the present teachings.

In the best mode, the mobile platform includes a cellular transceiver adapted for a GSM, CDMA, TDMA or other suitable IP-based network. The TV platform includes an IP connected SmartTV, game console or connected TV device, i.e Roku, AppleTV, Chromecast, FireTV, etc., capable of downloading apps and playing out content. Use of a subchannel such as GPRS is an option along with cloud based services as well as direct, radio or television broadcast transmission without departing from the scope of the present teachings. Hence, reference to GPRS in this Specification or the Drawings should be understood to refer to such alternative embodiments.

The content is transferred through one or more of these cellular channels and is adaptable to any other popular PCS system and, after receipt, merely sit in the target receiving platform's memory until playback.

The operation of the technology will now be provided with respect to an illustrative advertising application. Nonetheless, those of ordinary skill in the art will appreciate that the present teachings may be utilized for other content distribution applications without departing from the scope of the present teachings.

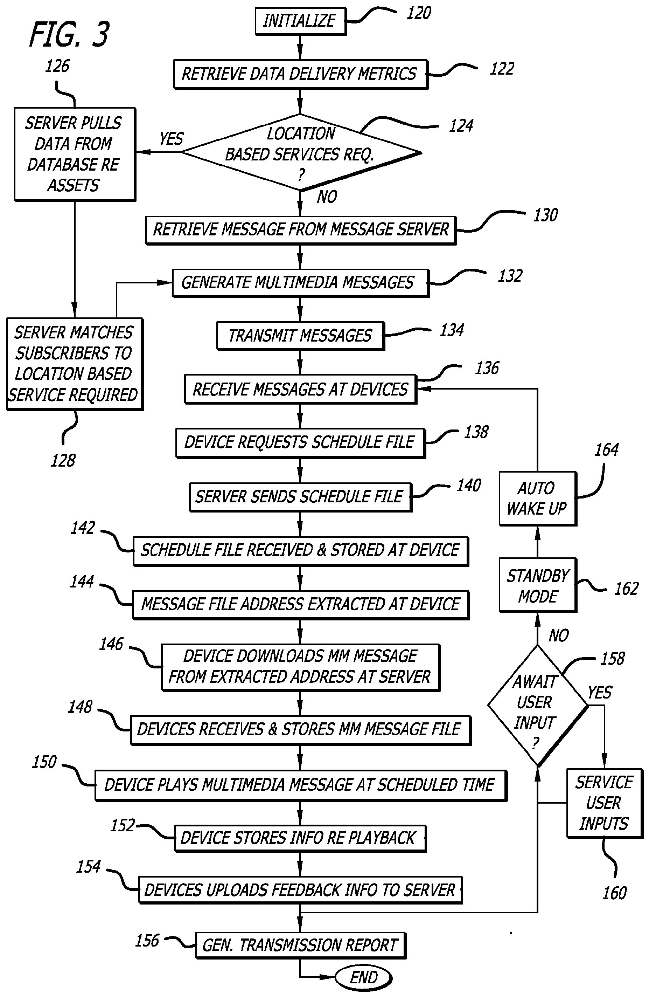

Figure 3 is a flow diagram of illustrative software running on the controller to effect control of the operation of the system of Fig. 1. As shown in Fig. 1, a message server 60 is connected to controller 50 either directly or via a network. As illustrated in Fig. 3, in accordance with the method 100, at step 122, the message server 60 accesses a database of message delivery metrics defining the selection and timing of multimedia messages to be sent selectively to each device of a set of devices served by the controller 50. Each device may alternatively receive and store one or more multimedia messages with a separate schedule file which is processed by the messaging module to present messages at predetermined times according to the schedule. At step 124, the system checks to see if location based services are requested. If so, at step 126, the server pulls data from a database 53 of mobile platform assets. At step 128, the server then matches subscribers to location based service requests and moves to step 132.

If, at step 124, location based services are not requested, then at steps 130 and 132, the controller 50 accesses a database 63 of content data for a number of content providers (e.g. advertisers) to enable individual message files to be generated such that, for example, each message file contains a video clip specific to a given provider. The message server 60 accesses a database of presentation data 61, the presentation data defining the manner in which the video clips are presented in terms of style, logos specific to the multimedia message provider and the control unit. In order to initiate a set of one or more multimedia messages being delivered to a device, the server sends a message to the applet on that device (step 134). The applet on the receiving platform receives the alert message which wakes the device from a low power state and is a notification to the user that there is new content to view in the applet of a scheduled file. In the preferred embodiment, the notification message is sent at the time of registration. The server need not continuously send out notification messages to initialize a schedule download. As an alternative, the download address may be stipulated and subsequently loaded onto the device at the point of installing the applet.

The messages are received at step 152 and at step 154, each device responds to the notification by initiating a GPRS session via the mobile network to request the schedule file. In response, at step 140, the server sends the schedule file via GPRS or TCP to be received and stored in the receiving platform (step 142).

As discussed above, the schedule file is an XML file containing details of a set of one or more multimedia message files, including for each message file the address in the server at which the message file can be accessed. This address is extracted at step 144 and used at step 146 to download the message from the server (step 148). In the illustrative embodiment, the device requests the multimedia message file via GPRS. The message is then transmitted by GPRS to the receiving platform where it is received and stored (step 148).

At step 150, the receiving platform plays the message file in the manner defined in the schedule file. This may involve playing the message file at predefined intervals over a period of one or more days until such time as an expiry time for the message file is reached. When an expiry is detected, the message file is deleted.

The display of the multimedia message is preferably controlled so that a currently played game or movie is not interrupted but that as soon as it is finished the receiving platform user is invited to view the multimedia message and further use of the entertainments function of the receiving platform are inhibited until the multimedia message has been displayed.

Successive data fields of the file are set out as follows:
- The version of XML schedule file is indicated. The device periodically requests updates to the XML file so that it is appropriate for the current issue of schedule file to be identified by a value representing the file version.
- An XML tag, e.g., "AdXero Ad" defines an address from which the message file can be downloaded.
- A "file name" field provides the name of the file containing the multimedia message.
- A "start time" field indicates the earliest time at which the message file is to be played, in other words the starting date and time from which delivery of the multimedia message is to commence.
- Similarly, an expiry time is indicated, providing the last date and time at which the multimedia message is to be delivered, and triggering the deletion of the message file.
- A "play type" field defines the earliest opportunity after the "start time" the content can play.
- A "repeat count" field defines the number of times that the message can be repeated before being deleted.
- A "repeat time" field defines the number of minutes between repeat message play.
- An "order" field defines a hierarchical order between competing multimedia message files, the message file having the highest order being played in preference to those having a lower order as defined in the field value contained in the XML file.

In the illustrative embodiment, the use of the schedule file provides efficient management of multimedia message files and requires only a single SMS message via the mobile network to initiate a succession of multimedia messages, the downloading and playing of the message files being controlled by the XML files, successive versions of which are received by the receiving platform. In the illustrative embodiment, the receiving platform will automatically check the server within the specified time window to ascertain if there is a new schedule to download. As an alternative, the schedule may include data regarding the time at which the next schedule is to be retrieved or a schedule update may be pushed to the device using an OTA notification command. In exceptional circumstances, a further notification message may trigger the downloading of a new schedule file when it is required to restructure the payback of multimedia messages with immediate effect.

An alternative embodiment provides a multimedia message that plays out immediately or requires user interaction via the user interface, as in the case of a competition or survey. In the latter case, the message could take the form of an application session which ends when all required user responses have been received.

Multimedia messages relating to a product or service available at a specific location may be targeted to devices whose position is determined to be in the immediate locality or within a specified radius.

If the server receives a demand for such localized multimedia messages to be generated, for example from multimedia message provider. The server refers to a database which contains details of each of asset of devices currently operating in the system and matches subscriber information for each device with details of the multimedia message in order to select a subset of devices which are eligible to be targeted with the multimedia message.

This matching process may contain a number of stages, commencing with an initial step of determining whether, for each device, the subscriber has opted to receive such multimedia messages. Where the subscriber has agreed to receive a specified number of multimedia messages within a given time period, for example 12 messages a day, the history of sending previous multimedia messages needs to be checked to ensure that the number of messages sent does not exceed the allowed number. Similarly, the subscriber may have agreed to accept messages at certain times or certain days of the week and this information is compared with the current demand for the multimedia message.

The resulting subset represents those devices for whom the subscriber has agreed to accept a message and for which the currently demanded multimedia message can be delivered in accordance with an agreed schedule for each subscriber. Further filtering may rely upon matching features of the advertisement with preferences of the subscriber, such as interest in sport, music and games.

At step 124, when location data for each device of the subset is requested, the server sends to each device a message requesting an indication of the current position of the device. The device responds with position data from its GPS software module, thereby enabling the server to accumulate position data for each device in the subset. The position criteria for the received demand for localized multimedia messages are then used to filter the subset so that for example where the localized multimedia messages are required within a one mile radius of a retail outlet with a promotion for a specific product, those devices identified from their position data as being outside of the one mile radius will be excluded from the subset, thereby providing a filtered subset of devices in the required location.

This request may be initiated by the receiving platform instead of originating at the server. That is, in this case, when the user selects 'find my nearest', the device will update its GPS position and send this data to the server via the GPRS connection. In doing so, it will send the latitude and longitude to the server. The mapping server 62 then provides a map, route and other Location Based Services based upon the users position and requested outlet. The server in return will send a map image and routing information to the receiving platform. At this point, the device opens a web browser and displays the map and routing information.

Multimedia messages are provided to each device of the filtered subset. In this embodiment, a notification message is transmitted to each device of the filtered subset, the message containing the URL (Universal Resource Locator) at which a schedule file and then the multimedia message can be downloaded via the Internet using the procedures described above. The multimedia message downloaded by the device may typically be a file of size 2 - 300k containing the multimedia message in the form of a video clip. The device user may then be invited to download a map showing the location of the outlet.

The multimedia message may also include a redeemable token which can be exchanged at the retail outlet for a discount or promotional offer. The token may be in the form of machine readable indicia such as a barcode which can be displayed at the point of sale and scanned by a conventional barcode reader, so that to redeem the token the device user simply presents the device at the point of sale where a barcode reader is used to read the barcode displayed in the display screen of the device. Hence, for this application, the display screen should have sufficient display resolution for barcode to be reliably detected.

The server, map data provider and multimedia message provider together comprise a control system for providing multimedia messages. These entities may be located separately and linked by networks or may be co-located as a single entity, and may comprise one or more processing units such as server computers.

In an alternative embodiment, the server sends the multimedia message directly to the device. Other messaging protocols may be used where appropriate.

In another alternative arrangement, an initial step of determining the approximate location of each device by obtaining cell identification information from the mobile network, such information being generally available when the device is registered with the mobile network and receiving signals within one of the cells of the cellular network. The position information available is less specific than available via the GPS data of the device itself but can be used to initially reduce the subset of devices under consideration, thereby reducing the number of messages which need to be sent in a second step in order to obtain the GPS position data from each device.

The system may select a subset of devices for receiving an advertisement message by comparing an advertisement profile representative of content of the advertisement with subscriber information in respect of the device. Candidates can then be selected for receiving the multimedia message if the multimedia profile matches the subscriber information. For example, a subscriber who is known to be interested in sport may receive sports promotional material and a subscriber who has indicated a preference not to receive advertisements relating to motor vehicles may be excluded from receiving such material.

Selection of the basis of subscriber profile may be used in combination with selection on the basis of current location of the device, or alternatively the selection may be made independently of any position information.

Preferably each device stores in memory a record of each time the advertisement message is viewed together with the current location of the device at the time of viewing, the time at which the viewing occurred and any other information which may be of interest to the advertiser. This information is uploaded to the server and processed for use by the advertisement message provider; the upload of such data may occur at the same time that a schedule file is received.

At step 156, the advertisement message provider may then extract from the log for each device viewing profile data representative of the advertisement viewing history of the subscriber associated with the device. This information may be used in refining the targeting of further advertisement messages or for other purposes. The information may be collected for subsequent analysis as to the number of advertisement messages sent, the identity of each device user receiving a multimedia message, whether or not the advertisement was successful in inducing the device user to go to the specified location, and whether the barcode was used to take advantage of the special offer. This collected information may then be formatted in appropriate metrics to be provided to the advertiser as feedback for use in subsequent multimedia campaigns.

The log of information for each device may also be used to reward the device user. For each instance of viewing an advertisement message, the device may be allocated a credit so that by accumulating credits for multiple viewings of advertisement messages the amount of accumulated credits can be used as a basis for awarding the user.

In one embodiment, the system includes an accounting system which administers a subscriber account in which such credits reduce the amount debited to the subscriber in relation to use of telecommunications services. The subscriber may for example have a prepaid subscription account for mobile telephone calls and by accumulating credits may obtain discounted or free use of such calls.

Other rewards may be in the form of tokens redeemable at the point of sale, such tokens being transmitted for display on the device, for example as a bar code.

A business model for use of such a system can therefore be constructed so that the device user has minimal expenditure. Multimedia entities wishing to have advertisement messages delivered to a device may pay an amount for each message delivery instance ad in return will receive information extracted from the user log to confirm when and where the message was delivered and to which subscriber. The device user on the other hand could be rewarded such that for example for agreeing to watch ten advertisement messages per day the device could be provided at reduced or zero cost.

For example:

| **Example situation** | **Action** |
|---|---|
| Device is left overnight in its 'standby' state | AdXero Ad Schedule downloaded |
| | AdXero Ad(s) specified in schedule are downloaded |
| Device is turned on next day | AdXero Ads played back when appropriate to user |

Three types of OTA messages can be sent to the receiving platform to control AdXero Ads. All download locations are set by a link set in the shell configuration. An example of this could be:
Address: http://www.AdXeroAds.com/download/
This address can be updated by the use of an OTA message. The message contains the new address that should be used for downloading and uploading of feedback information, this adds future flexibility and locale specific configuration if necessary.

If schedules need to be updated with immediate effect, the following types of OTA configuration messages can be sent:
- Delete a specific AdXero Ad before playback
   ∘ One or more specific ads can be referenced (if space is available in the OTA message)
- Delete all remaining Ads and force a update of the schedule
   ∘ New AdXero ads could then be downloaded regardless of the current local time

### Schedule Downloading

The schedule file specifies the AdXero ad(s) to download, information such as when to download, and when to playback, special instructions about playback and expiry information are included.

The download location for the schedules is a preset location based on the download address. This will be called the AdXero ad Schedule Address and can be changed by resending the OTA message to configure the download location. An example of this address could be: 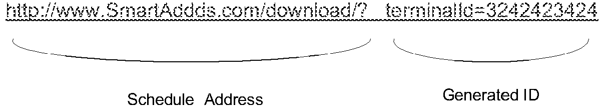 The 'ID' tag is a unique ID of an assigned receiving platform after running through a basic encryption mechanism.

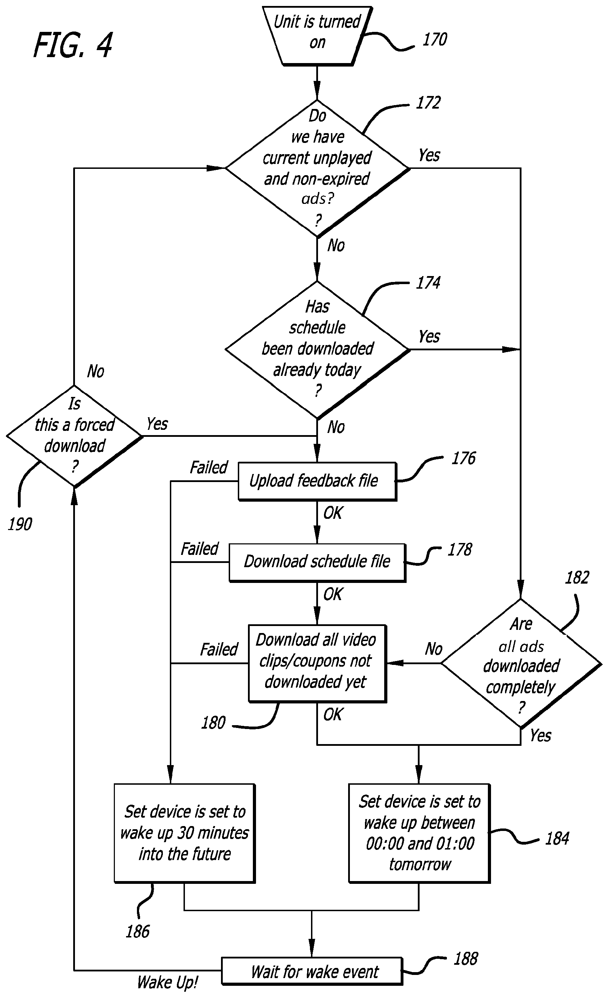

Figure 4 is a flow diagram of schedule and AdXero ad downloading logic in accordance with an alternative embodiment of the present teachings. In this embodiment, the schedule information file is retrieved once per day (step 170 - 174) with the flight mode disabled Flight mode disables all modem functionality. Therefore, if the receiving platform has a flight mode enabled, users will not receive any AdXero ads as well as SMS, MMS, voice calls, GPRS etc. Flight mode functionality is available on many modem phone types. (unless there are un-played AdXero ads still pending). At steps 176 - 180 (even numbers only) the unit uploads a feedback file, downloads a schedule file and downloads the multimedia content respectively. The unit may retry every 30 minutes, for example, until downloading is complete. Once complete the unit sets its wake up timer for the next day.

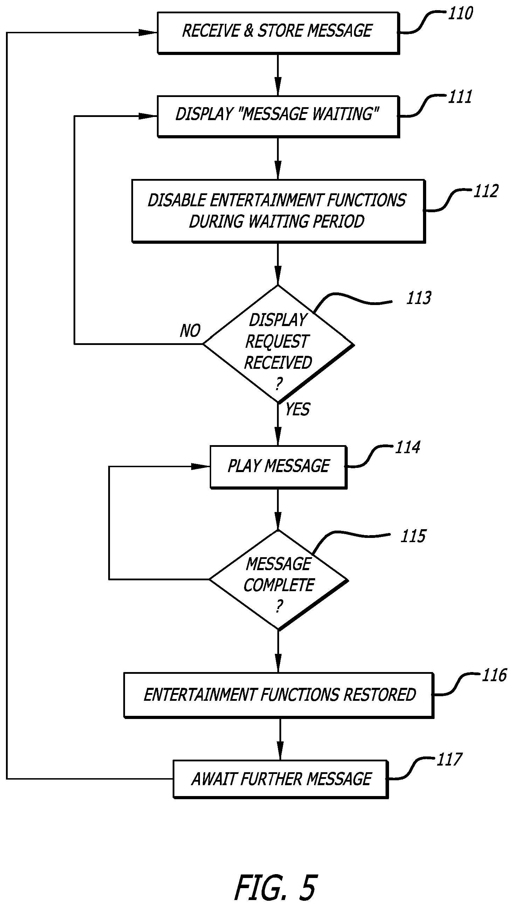

Figure 5 is a flow diagram showing an illustrative implementation of the playback functions. In this implementation, after a message is received and stored (step 110), a "message waiting" indicator is displayed (step 111). The entertainment functions are then disabled (step 112) and the unit waits for a display request (step 113). On receipt of the request, the unit plays the multimedia message (step 114). When the message is complete, the entertainment functions are restored (step 116).

### Schedule XML interface

In the illustrative embodiment, the schedule information is contained within an XML file. Illustrative valid attributes and values with their working descriptions are given below:

| XML Theme Attributes | Values | Description and Usage |
|---|---|---|
| version | 1 | Describes the version of XML Schedule being downloaded |
| minBackToBack | default 30 | Specifies the minimum time in minutes between AdXero ad being able to play. |

| XML Tags | Description and Usage |
|---|---|
| ADXEROAD | Describes the XML node for a smart ad |

| AdXero Ad XML Attributes | Values | Description and Usage | |
|---|---|---|---|
| Id | Integer | Id of the AdXero ad for playback identification | |
| Filename | ftp/http/https link | Absolute link of file to download, i.e. | |
| | (wmv movie file) | http://www.AdXeroAds.com/dnloadad1.wmv | |
| Coupon | ftp/http/https link | Absolute link of file to download, i.e. | |
| | (jpg/gif coupon file) | http://www.AdXeroAds.com/coupon1.jpg | |
| Link | http/https web link | Absolute link to web site | |
| | | http://www.AdXeroAds.com/adl.html | |
| playStartTime | day/month/year@hr:min | Earliest time that the AdXero ad should be played. i.e. 16/04/2004@07:30 | |
| playExpireTime | day/month/year@hr:min | | Latest time that the AdXero ad should be played i.e. 16/04/2004@16:30 |
| playType | normal | | AdXero ad is played at the earliest opportunity after playStartTime (optional, default = normal) |
| Priority | 0...n | | Order of ad playback, higher order ads will be played in preference to lower order AdXero ads (optional, default 0) |

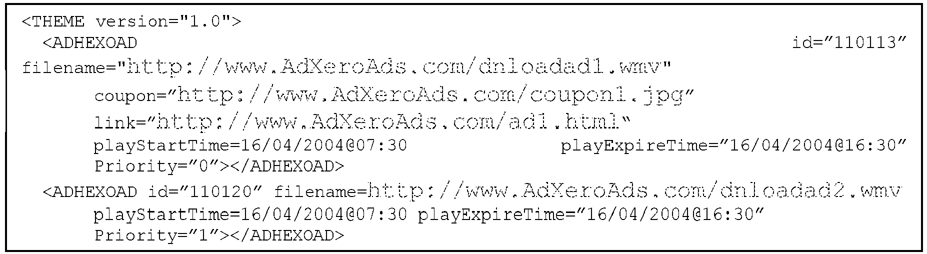

Multimedia content will playback between the times specified in the **playStartTime** and **playExpireTime** XML tags.

The content is prioritized by the **order** tag, higher order content is played before lower order content if more than one message is valid for a given time.

The content can be deleted after it is played. As an alternative, the content may be forwarded from one device to another (peer-to-peer) using Bluetooth, infrared or other functionality. Where appropriate, and as an alternative, the URL (User Record Locator) only of the content (e.g. the AdXero ad) may be forwarded from one device to another. This is particularly advantageous where the devices are dissimilar as it would allow a version to be downloaded from a server that is optimized for the receiving device.

The minimum time between playback of AdXero ads can be specified in the XML theme header of the schedule using the **minBackToBack** tag; otherwise a predetermined, e.g., 30 minute minimum, back to back playback may be assumed. This is used when two or more ads are available to play at the same time. This rule stops immediate playback of the second ad after the first has played.

In the illustrative embodiment, valid AdXero ads will play when the user navigates to the home screen (this is the top most menu). When an AdXero ad is downloaded/played/stored a log of this information is stored on the device. In the illustrative embodiment, before the next schedule is downloaded this information is posted to the server.

The schedule file is in XML form, for example:

| XML Theme Attributes | Values | Description and Usage |
|---|---|---|
| Version | 1 | Describes the version of XML Playback information being uploaded |

| XML Tags | Description and Usage |
|---|---|
| SCHEDULE | Describes the XML schedule information |
| ADXEROAD | Describes a particular AdXero ad and an action performed |
| UNIT | Describes specific unit information |

### ADXERO AD Tags

| XML Attributes | Values | Description and Usage |
|---|---|---|
| Id | 0..n | Id of the AdXero ad, corresponding to the id specified in a previous schedule XML |
| Action | 0..2 | 0 = downloaded |
| | | 1 = played and discarded |
| | | 2 = played and saved |
| actionTime | UTC | Time of action |
| gpsLong | Degrees | Location of action |
| gpsLat | Degrees | Location of action |

### Schedule Tags

| XML Attributes | Values | Description and Usage |
|---|---|---|
| downloaded | UTC | Time of schedule download |
| gpsLong | Degrees | Location of unit during download |
| gpsLat | Degrees | Location of unit during download |

### Unit Tags

| XML Attributes | Values | Description and Usage |
|---|---|---|
| TerminalID | 8 Bytes | TerminalID |

Once the AdXero ad application is installed the registration process will be executed. This process opens a web browser with the server; the user is walked through a series of pages that will cover:
- Users details (Name, date of birth, gender, Postcode etc),
- user's preferences (Likes/Dislikes)
- Receiving platform selection
- Legal information

In the illustrative embodiment, a unique serial number is generated in the registration process to identify the receiving platform and SIM combination. This is used to identify the targeted AdXero ad receiving platform. At the point of purchasing the device, the purchaser is invited to accept an option to undertake to receive a schedule of multimedia messages which may for example be limited to a specific number of messages per month.

Preferably, the registration process is web based and therefore can be tailored for different receiving platform display outputs. In the illustrative embodiment, after receiving platform registration the network will know the following basic facts of the receiving platform:
- a unique registration number
- the exact phone and OS running on the receiving platform
- screen requirements
- video codec requirements
- audio codec requirements

The user may then be invited to visit a web site and provide information on their entertainment interest. When the user logs into this web page, they give their user name and password - which then links their responses back to their unique serial number and thus to the initial registration information. This allows for a segmentation of those users who provide this information by entertainment interests, as well as their gender/age/home location gathered from the terminal registration.

At predetermined intervals, e.g., once every 24 hours, within a specified 'window' (programmed to start in the middle of the night), each receiving platform automatically queries the server. This occurs if the receiving platform is either in ON or STANDBY mode. If the receiving platform is turned OFF, it will either turn on and access the server or access the server the next time it is turned ON (whatever the time of day that happens to be). It will continue to download the schedule periodically, e.g., every 30 minutes, until it has successfully downloaded to the receiving platform.

If there is an AdXero ad scheduled to be served to the receiving platform, there will be an XML file ready for it to download. The XML file downloads. It contains the transmission schedule for that receiving platform (ad type, play time). The schedule can be as far in advance as we choose to make it (the next week's ads or just the next day's ads).

Once the schedule has been downloaded the AdXero ads themselves are downloaded over GPRS and stored on the device. Where to download the AdXero ad content from is detailed in the schedule file, these can be any FTP/HTTP/HTTPS addresses.

Example: An ad has a play-out window of 09:00 to 12:00 the next day. At 09:00, the receiving platform makes a "bleep" - the sound of a text message arriving. If the receiving platform is on the main menu page, then the next button that the user has to press is the "play message" button. No button works until it is pressed. The ad has to play through completely (again no button works). If at 09:00 in this example, the user was doing something on the receiving platform (sending a text/listening to music etc) then they get the text alert sound - but are not disturbed in their activity. However, when they next go back to the main menu, or if they try to turn off the receiving platform, they find they have to play the message/ad first - and no other buttons work until it has played through.

The receiving platform then provides an indication to the device user that a message is awaiting viewing. In this embodiment, the receiving platform indicates to the user it has received a multimedia message file and generates output data causing the display screen to display a notification message. The receiving platform then waits to receive input from the device user via the control pad as an instruction to display the message. While the advertisement is playing, the entertainment functions of the receiving platform are temporarily disabled. These functions include the ability to play games, playback video and audio material, and provide any other entertainment features of the receiving platform.

The device user is thereby presented with the multimedia message in the form of a video clip, audio clip, or other formats such as animated graphics. When it is determined that playback of the multimedia message has been completed, the entertainment functions of the receiving platform are fully restored and further messages are awaited. This temporary interruption of availability of entertainment function provides an incentive to ensure the multimedia message is delivered to the device user.

Once the ad has played through the receiving platform, the user has the option of saving the ad, coupon and web-link. If there are numerous ads scheduled to play within the same window, the illustrative configured 30 min play back-to-back configuration is set as default. This can be configured per schedule.

In accordance with the present teachings, feedback is produced to provide information on all aspects of the AdXero ad process. For example, the next time the receiving platform logs into the server it reports back on:
- Registration information of receiving platform
- Previous schedule download time
- Each AdXero ad download time and success information
- Playback of each AdXero ad
- Played ok (including time of playback)
- Expired before playback could be attempted
- Users action regarding AdXero ad
- AdXero ad was saved for future viewing
- AdXero ad was discarded after playback
- AdXero ad was viewed again

This data is provided in a transmission report, generated from server. The process should be invisible to the user.

In the best mode, the devices are equipped with receivers responsive to signals from Global Positioning System (GPS) Satellites for determining the position of the device, the GPS data being used for location and direction purposes. For users of these devices, if the advertiser has a "find my nearest store" option at the end of the ad, the user is provided with a capability to see store listings preferably with a couple of button clicks.

The "find my nearest" facility ascertains the users current location position and routes them to their chosen store. The solution provides this information with map and/or turn-by-turn directions. The solution might be:
- Exit the ad, and select "GPS and web services"
- There would be a separate folder called "AdXero ads advertiser locations"
- In that folder the advertisers are in alphabetical order.
- Select the advertiser.
- That selection (behind the scenes) links to the Map Info database, and calls up the map.

As noted above, the inventive system is adapted for transmitting, receiving and outputting multimedia content and provide confirmation of viewing of same and includes: a server for transmitting multimedia content via a network, said content containing audio as well as video content; a system for receiving and viewing television content; a mobile computing and communications platform for automatically providing a signal to the server effective to confirm viewing of the content on a television by a user.

In illustrative embodiments, the system is adapted to store and execute software with code for automatically detecting and selecting alternate platforms for viewing the content, including television, mobile, personal computing and gaming platforms. Code is included for sending the content from one alternate platform to another.

In addition, multiple confirmation modes are provided including user prompts, eye tracking, reading of embedded QR codes and automatic content recognition.

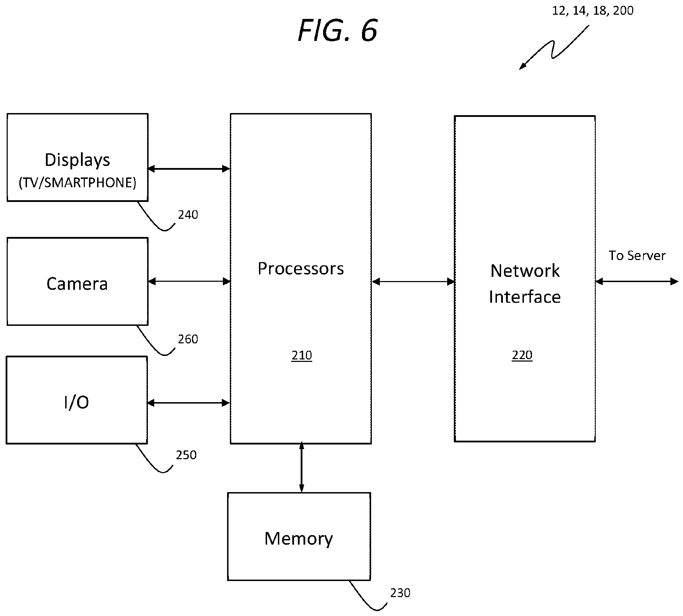

This is illustrated in Figures 6 - 8 below.

Figure 6 is a simplified block diagram of illustrative embodiment of a receiver side platform in accordance with the present teachings. As discussed more fully below, in the illustrative embodiment, the receiver side platform or device 200 includes one or more processors 210 adapted to receive the content from the server 40 and network 16 of Figure 1 via a network interface 220. The content and instructions for displaying the content are received by the processor 210 and stored in memory 230. In accordance with instructions and user I/O preferences previously stored in memory 230 and any schedule data received from the server 40, the processor 210 displays the received content on a television screen, gaming platform, smartphone or other display 240.

User prompts are received by the processors 210 via a user input/output (I/O) interface 250 and or camera 250. That is, in one alternative embodiment, eye tracking software stored in memory 230 enables the processors 210 to track the user's eye movement via an onboard or operationally coupled camera 260 to provide confirmation of content viewing as discussed more fully above.

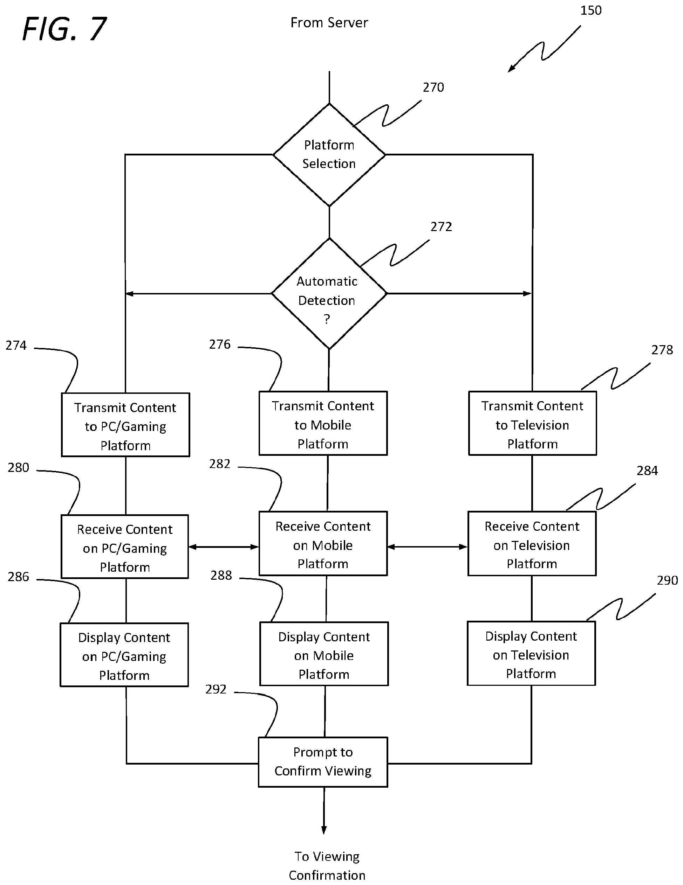

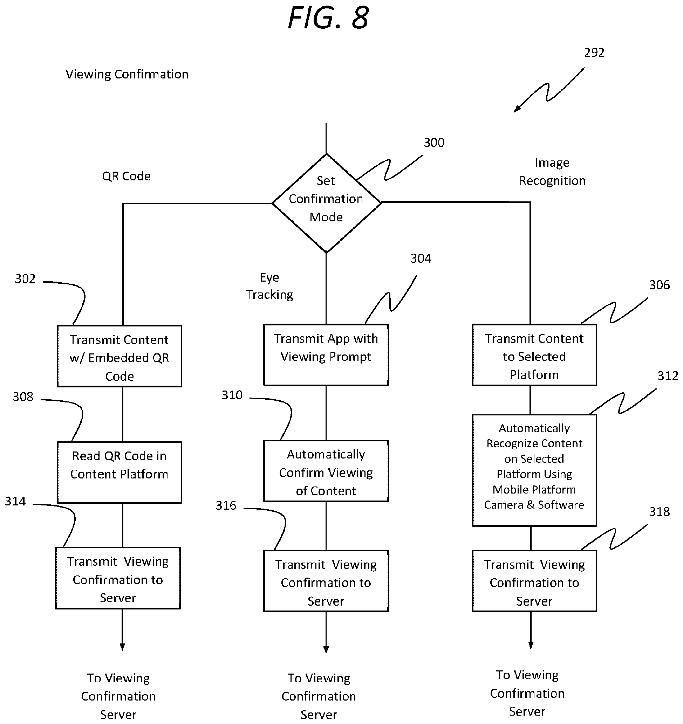

In the best mode, the receiver side platform 200 enables a user to view ads and other content on a television screen using the steps illustrated in Figures 7 and 8 below.

Figure 7 is a flow diagram of an illustrative implementation of the content display function shown in Figures 3 and 5 in accordance with the present teachings. That is, Figure 7 illustrates an illustrative implementation of the Step 150 of Figure 3 relating to the playout of the message at the scheduled time. In accordance with the present teachings, at step 270 the processor 210 performs a platform selection based on user preferences initially determined at installation and setup and thereafter based on user preferences and/or proximity.

That is, at step 272 the system 200 may be set so that initially, the default platform is the user's smartphone. Thereafter, if a television, personal computing or gaming platform is activated, software code running on the processor 210 of the system 200 will give the user the option to select any of these platforms for automatic activation, optionally based on user location relative to the platform.

At steps 274 - 284, content sent from the server 40 is received by the platform selected at step 270 and detected at step 272. The transmission path for the content may be direct to the selected platform via a television broadcast channel, a WiFi network or via a WiFi, Bluetooth or other wireless or wired connection from the user's smartphone as shown at step 282. While software and systems for casting from smartphones to televisions are well-known in the art, it should be understood that the content may be cast from any platform to another using the same or similar methodology currently known in the art, without departing from the scope of the present teachings.

In any case, at steps 286 - 290, the content is displayed for viewing by the user based on the user response to a notification as discussed above.

After viewing, at step 282, the user is prompted to confirm viewing. A methodology for implementing step 292 to confirm viewing in accordance with steps 152, 154 (Figure 3) is shown in Figure 8.

Figure 8 is a flow diagram of an illustrative implementation of the viewing confirmation function shown in Figure 3 and 5 in accordance with the present teachings. At step 300, the confirmation is selected automatically, initially, at setup based on the firmware in the system 200, user setup, and/or commands from the server 40 and thereafter, manually, based on preferences, or responses to prompts, provided by the user.

In a most simple implementation, a prompt appears on the display screen after the content is displayed and the user response is uploaded to the server as discussed above. In a television application, in accordance with the present teachings, the content is displayed onscreen and the user responds to the prompt using a remote control unit or a smartphone which may or may not be programmed to serve as a remote control for the television.

In an alternative embodiment, a QR code is displayed on screen during the playout of the content or thereafter. At step 308 (Figure 8) software on the user's smartphone stored in memory 230 and executed by processor 210 decodes the QR code received by the camera 260 (See Figure 6). Software for reading QR codes using smartphone cameras is well-known in the art and typically provided in modem smartphones. In response, at step 314, the processor 210 (Figure 6) sends the confirmation data to the controller 50 (Figure 1) directly or via an external HTML or other link.

In accordance with an alternative embodiment, at step 304 in Figure 8, eye tracking software is installed on the platform 200. In this case, as step 310, viewing of the content is automatically confirmed by tracking the user's eye movement during playout of the content. In addition, the location of the point of focus of the user's attention can be determined and, at step 316, forwarded to the server platform to provide additional data as to any and all aspects of the content the user was most interested in and when.

In yet another embodiment, image recognition is implemented. In this case, at step 312, content is displayed on one platform (such as a television, PC or gaming screen) and image recognition software, installed and running on the user's smartphone, recognizes the content, while the user points his or her smartphone camera at the screen, and at step 318, automatically sends viewing confirmation to the server platform. Metadata may be stored in the content and displayed in a way that is invisible to the user and yet still detected by the smartphone camera and processor.

In any case, it should be noted that audio associated with the content may be detected via a microphone on the user's smartphone, not shown in Figure 6, as well and used for automatic recognition and confirmation in addition to or in lieu of the video *per se* as discussed above.

It should be noted that in addition to confirming viewing, the automatic recognition schemes disclosed above may also be used to display secondary audio or video content in response to the detection of primary content. That is, the detection of an ad can cause another ad or program to be displayed. A user viewing the secondary ad may be compensated in the normal course or awarded a special dispensation or prize for viewing and responding to the secondary or tertiary content in accordance with the preferences of the content provider and the string of concatenated ads or other content may extend indefinitely without departing from the scope of the present teachings.

Hence, the ads designation of the ads provided by the present technology as 'smart ads'. In any case, the present teachings are not limited to use with advertisements or 'ads'. On the contrary, the present teachings may be utilized in any scenario where confirmation of viewing of content is desired. For example, the present teachings may be used to confirm viewing of regular programming content, to provide an instantaneous viewership and/or ratings system.

Further, the present teachings are not limited to the user platforms discussed in the illustrative embodiments above. Additional platforms and display technologies may be used such as augmented reality (AR) without departing from the present teachings. In an AR application, the content from the server may be projected in AR or secondary content springing from the primary content may be projected in AR without departing from the scope of the present teachings.

Those having ordinary skill in the art and access to the present teachings will recognize additional modifications, applications and embodiments within the scope thereof.

The scope of protection is defined only by the appended claims.

## Claims

1. A system (10) configured for transmitting, receiving and outputting multimedia content and confirmation of viewing of same, the system including:
a server (64) configured for transmitting multimedia content via a network (16), said multimedia content containing audio as well as video content;
a first viewing platform (12) configured for receiving and viewing television content;
the system being configured for, after receiving and storing (110) said multimedia content, displaying (111) an indicator of said multimedia content being waiting to be displayed upon request and disabling (112) the viewing of said television content until (116) the multimedia content has been displayed (114) upon request (113) by a user; and
a mobile computing and communications platform configured for automatically providing a signal to the server effective to confirm viewing of the multimedia content on a viewing platform by the user;
the system being further configured for selecting alternate viewing platforms for viewing the multimedia content.

2. The system of Claim 1 further configured for automatically detecting said alternate platforms for viewing the multimedia content.

3. The system of Claim 1 further configured for sending the multimedia content from one alternate platform to another.

4. The system of Claim 1 wherein said alternate platforms are television, mobile, personal computing and gaming.

5. The system of Claim 1 further configured for implementing multiple confirmation modes.

6. The system of Claim 5 wherein one of the confirmation modes comprises a user prompt.

7. The system of Claim 5 wherein one of the confirmation modes is provided by a user eye tracking system that comprises an eye tracking software stored in a memory (230), said software enabling a processor (210) to track a user's eye movement via an onboard or operationally coupled camera (260).

8. The system of Claim 5 wherein one of the confirmation modes is based on a displaying of a QR code embedded in the multimedia content, the system comprising a software for reading QR code using a camera of the mobile computing and communications platform.

9. The system of Claim 5 wherein one of the confirmation modes involves displaying of content provided for automatic content recognition, the system comprising an image recognition software using a camera of the mobile computing and communications platform.

## Patentansprüche

1. System (10), das so konfiguriert ist, dass es Multimedia-Inhalte überträgt, empfängt und ausgibt, und Bestätigung, dass sie betrachtet werden, das System einschließend:
einen Server (64), der so konfiguriert ist, dass er Multimedia-Inhalte über ein Netzwerk (16) überträgt, wobei die Multimedia-Inhalte sowohl Audio- als auch Video-Content enthalten;
eine erste Wiedergabeplattform (12), die so konfiguriert ist, dass Fernsehinhalte empfangen und betrachtet werden können;
wobei das System so konfiguriert ist, dass es nach dem Empfangen und Speichern (110) der Multimedia-Inhalte einen Hinweis darauf anzeigt (111), dass die Multimedia-Inhalte zur Anzeige auf Anforderung bereitstehen, und die Wiedergabe (112) der Fernsehinhalte deaktiviert, bis (116) die Multimedia-Inhalte auf Anforderung (113) eines Nutzers (114) angezeigt wurden; und
eine mobile Rechen- und Kommunikationsplattform, die so konfiguriert ist, dass sie automatisch ein Signal an den Server bereitstellt, das geeignet ist, die Wiedergabe der Multimedia-Inhalte auf einer Wiedergabeplattform durch den Nutzer zu bestätigen;
wobei das System ferner konfiguriert ist, alternative Wiedergabeplattformen für die Anzeige der Multimedia-Inhalte auszuwählen.

2. System nach Anspruch 1, das ferner konfiguriert ist, die alternativen Plattformen zur Anzeige der Multimedia-Inhalte automatisch zu erkennen.

3. System nach Anspruch 1, das ferner konfiguriert ist, die Multimedia-Inhalte von einer alternativen Plattform an eine andere zu übertragen.

4. System nach Anspruch 1, wobei die alternativen Plattformen Fernsehen, mobile Geräte, Personalcomputer und Gaming-Plattformen sind.

5. System nach Anspruch 1, das ferner konfiguriert ist, mehrere Bestätigungsmodi zu implementieren.

6. System nach Anspruch 5, wobei einer der Bestätigungsmodi eine Benutzereingabe umfasst.

7. System nach Anspruch 5, wobei einer der Bestätigungsmodi durch ein Augen-Tracking-System bereitgestellt wird, das eine in einem Speicher (230) gespeicherte Augen-Tracking-Software umfasst, wobei die Software einen Prozessor (210) dazu befähigt, Augenbewegungen eines Nutzers mittels einer Onboard- oder operativ gekoppelten Kamera (260) zu verfolgen.

8. System nach Anspruch 5, wobei einer der Bestätigungsmodi auf der Anzeige eines in die Multimedia-Inhalte eingebetteten QR-Codes basiert, wobei das System eine Software zum Auslesen des QR-Codes mittels einer Kamera der mobilen Rechen- und Kommunikationsplattform umfasst.

9. System nach Anspruch 5, wobei einer der Bestätigungsmodi die Anzeige von Inhalten umfasst, die für eine automatische Inhaltserkennung bereitgestellt werden, wobei das System eine Bilderkennungssoftware umfasst, die eine Kamera der mobilen Rechen- und Kommunikationsplattform nutzt.

## Revendications

1. Système (10) conçu pour transmettre, recevoir et produire un contenu multimédia et la confirmation de la visualisation de celui-ci, le système comportant :
un serveur (64) conçu pour transmettre un contenu multimédia par l'intermédiaire d'un réseau (16), ledit contenu multimédia contenant du contenu audio ainsi que du contenu vidéo ;
une première plateforme de visualisation (12) conçue pour recevoir et visualiser un contenu télévisuel ;
le système étant conçu pour, après réception et stockage (110) dudit contenu multimédia, afficher (111) un indicateur dudit contenu multimédia en attente d'affichage sur demande et désactiver (112) la visualisation dudit contenu télévisuel jusqu'à ce que (116) le contenu multimédia ait été affiché (114) sur demande (113) par un utilisateur ; et
une plateforme informatique et de communication mobile conçue pour fournir automatiquement un signal efficace au serveur afin de confirmer la visualisation du contenu multimédia sur une plateforme de visualisation par l'utilisateur ;
le système étant conçu en outre pour sélectionner des plateformes alternatives de visualisation destinées à visualiser le contenu multimédia.

2. Système selon la revendication 1, conçu en outre pour détecter automatiquement lesdites plateformes alternatives destinées à visualiser le contenu multimédia.

3. Système selon la revendication 1, conçu en outre pour envoyer le contenu multimédia à partir d'une plateforme alternative à une autre.

4. Système selon la revendication 1, dans lequel lesdites plateformes alternatives sont la télévision, le téléphone mobile, l'informatique personnelle et le jeu.

5. Système selon la revendication 1, conçu en outre pour mettre en œuvre de multiples modes de confirmation.

6. Système selon la revendication 5, dans lequel l'un des modes de confirmation comprend une invite d'utilisateur.

7. Système selon la revendication 5, dans lequel l'un des modes de confirmation est fourni par un système de suivi oculaire d'utilisateur qui comprend un logiciel de suivi oculaire stocké dans une mémoire (230), ledit logiciel permettant à un processeur (210) de suivre le mouvement oculaire d'un utilisateur par l'intermédiaire d'une caméra embarquée ou couplée de manière fonctionnelle (260).

8. Système selon la revendication 5, dans lequel l'un des modes de confirmation est basé sur un affichage d'un code QR incorporé dans le contenu multimédia, le système comprenant un logiciel destiné à lire le code QR à l'aide d'une caméra de la plateforme informatique et de communication mobile.

9. Système selon la revendication 5, dans lequel l'un des modes de confirmation implique l'affichage d'un contenu fourni pour la reconnaissance automatique de contenu, le système comprenant un logiciel de reconnaissance d'image à l'aide d'une caméra de la plateforme informatique et de communication mobile.
